# EUROPÄISCHE PATENTSCHRIFT

(11) **EP 0 643 872 B1**
(45) Veröffentlichungstag und Bekanntmachung des Hinweises auf die Patenterteilung: **18.06.1997**
(21) Anmeldenummer: 94911092.8
(22) Anmeldetag: 30.03.1994
(51) Int. Cl.: H01F 7/16

(54) **BISTABILER ELEKTROMAGNET, INSBESONDERE MAGNETVENTIL**
BISTABLE ELECTROMAGNET, IN PARTICULAR MAGNETIC VALVE
ELECTRO-AIMANT BISTABLE, NOTAMMENT VANNE MAGNETIQUE

(30) Priorität: 31.03.1993 DE 4310415; 28.09.1993 DE 4332960
(43) Veröffentlichungstag der Anmeldung: 22.03.1995
(73) Patentinhaber: SCHROTT, Harald, D-88131 Lindau (DE)
(72) Erfinder: WISSKIRCHEN, Michael, D-88099 Neukirch (DE); GESER, Bernd, D-88142 Wasserburg (DE)
(74) Vertreter: Patentanwälte Eisele, Otten & Roth
(86) Internationale Anmeldenummer: DE9400358
(87) Internationale Veröffentlichungsnummer: WO9423435

(56) Entgegenhaltungen:
- WO-A-91/01622
- DE-B- 1 166 369
- DE-B- 1 282 402
- FR-A- 2 101 538
- US-A- 4 422 060
- PATENT ABSTRACTS OF JAPAN vol. 4, no. 75 (E-13) (557) 31. Mai 1980 & JP,A,55 043 867 (NIPPON KIKAKI SEISAKUSHO)

## Beschreibung

Die Erfindung betrifft einen bistabilen Elektromagnet, insbesondere ein Magnetventil, das von einem Elektromagnet mit den Merkmalen des Gattungsbegriffs des Patentanspruchs 1 betätigt wird. Ein Elektromagnet dieser Art hat gewöhnlich eine zylindrische Spule und wird häufig als Tauchankermagnet bezeichnet. Das Joch kann einen die Spule umgebenden Hohlzylinder enthalten oder aus einem U-förmig gebogenen Flachmaterial bestehen.

Ein bekannter bistabiler Elektromagnet ist in der europäischen Patentanmeldung 0 219 572 beschrieben. Er betätigt ein Vakuumventil und zeichnet sich dadurch aus, daß der gesamte Spulenkern als Permanentmagnet ausgebildet und dem Anker feststehend zugeordnet ist. Durch einen positiven Gleichstromimpuls taucht der Anker in die Spule ein und wird vom Permanentmagneten entgegen der Federkraft in dieser angezogenen Betriebsstellung gehalten. Ein negativer Gleichstromimpuls schwächt die Haltekraft des Permanentmagneten so sehr, daß die Federkraft überwiegt und der Anker in die abgeworfene Betriebsstellung geht.

Allerdings ist die Haltekraft des Permanentmagneten in der angezogenen Betriebsstellung sehr toleranzempfindlich, d. h. die unvermeidlichen Fertigungstoleranzen des Permanentmagneten und der anderen Bauteile machen in der Serienfertigung eine individuelle mechanische Justierung oder Justierung der Zeitdauer oder Amplitude des Steuerimpulses unumgänglich. Ein weiterer Nachteil des bekannten Magneten besteht darin, daß der Abwerfimpuls so lange andauern muß, bis sich der Anker nicht mehr im Einflußbereich des Permanentmagneten befindet. Daher ist die Steuerenergie trotz der prinzipiell sparsamen Betriebsweise unerwünscht hoch.

Ein anderer bistabiler Elektromagnet ist aus der internationalen Patentanmeldung mit der Veröffentlichungsnummer WO 91/01622 bekannt. Beschrieben ist insbesondere eine spiegelbildliche Anordnung zweier Magnetventile, deren gemeinsames feststehendes Magnetsystem eine Spule, einen Kern als ersten Pol und einen Polring als zweiten Pol aufweist. Das aktive bewegliche Element ist ein im Bereich der Pole angeordneter Permanentmagnet, der in zwei stabilen Stellungen magnetisch einrastet. Außerdem ist ein Anker vorgesehen, der nur mit einem kleinen Teil seiner Länge in den Polring hineinragt und durch eine Feder vom Polring und Permanentmagnet weggedrängt wird. Der Anker wird vom Permanentmagnet mitbewegt, d.h. beim Stellungswechsel bewegen sich beide Elemente jeweils in die gleiche Richtung.

Dieser Elektromagnet braucht zwar wenig Strom, hat aber nur eine äußerst geringe Zug- und Schubkraft. Die Dauer und Stärke der Stromimpulse sowie die Reibungsverhältnisse erfordern so enge Toleranzen, daß eine Fertigung auf kommerzieller Grundlage nicht möglich ist.

Der Erfindung liegt die Aufgabe zugrunde, einen bistabilen Elektromagnet der einleitend geschilderten Art so auszubilden daß er ohne Toleranzabgleich gefertigt werden kann und weniger Steuerenergie erfordert.

Diese Aufgabe wird erfindungsgemäß durch die Merkmale des kennzeichnenden Teils des Patentanspruchs gelöst. Danach hat der Permanentmagnet bezüglich des feststehenden magnetischen Systems zwei Endstellungen, nämlich eine näher am Anker gelegene und eine vom Anker weiter entfernte. In der Betriebsstellung mit angezogenem Anker nimmt der Permanentmagnet die dem Anker angenäherte Endstellung ein und hält diesen entgegen der Federkraft fest. Beim Abwurfimpuls wird dagegen nicht nur die Haltekraft des Permanentmagneten geschwächt, sondern er wird gleichzeitig vom Anker weg in seine andere Endstellung bewegt. Dadurch wird sein Einfluß auf den Abwurfvorgang eliminiert und die Toleranzempfindlichkeit des Systems deutlich vermindert. Der Steuerimpuls kann schon enden, wenn der Permanentmagnet seine entfernte Endstellung erreicht hat. Durch diese Verkürzung der Bestromungszeit wird eine weitere Verringerung des Steuerenergieverbrauchs erreicht.

Um den erforderlichen Hohlraum im Spulenkern zu schaffen, wird dieser vorzugsweise als Topf ausgebildet, an dessen Boden sich der Permanentmagnet in der entfernten Endstellung magnetisch festhält, während der Permanentmagnet in der anderen Endstellung durch einen Anschlag so gehalten wird, daß seine dem Anker zugewendete Seite mit dem Rand des Topfes etwa bündig ist. Der Anschlag kann eine magnetisch nicht leitende Querwand im Spuleninnenraum sein, die zwischen dem Permanentmagnet und dem Anker verläuft. Bei einer bevorzugten Anwendung des Elektromagneten als Magnetventil ist diese Querwand die Stirnwand einer Führungsbuchse, in welcher sich der Anker bewegt und die ein beispielsweise flüssiges Medium, welches durch das Ventil gesperrt werden soll, dicht einschließt.

Um eine leichte Beweglichkeit des Permanentmagneten zu gewährleisten, wird weiter vorgeschlagen, daß ein den Permanentmagneten umfassender magnetisch nicht leitender Führungskäfig vorgesehen ist, der an seiner Mantelfläche mit Längsrillen versehen ist und in dem topfförmigen Spulenkern oder am Permanentmagnet befestigt ist. Beispielsweise könnte dieser Führungskäfig eine aus Kunststoff bestehende Auskleidung des Hohlraums des Spulenkerns sein. Als besonders zweckmäßig hat sich ein Topf aus Edelstahl erwiesen, in welchem der Permanentmagnet eingebettet, insbesondere mittels eines Klebers fest verbunden ist.

Ein Ausführungsbeispiel der Erfindung wird anhand der Zeichnung erläutert. Im einzelnen zeigt
- Fig. 1: einen Längsschnitt eines als Servoventil ausgebildeten bistabilen Elektromagneten in der abgeworfenen Betriebsstellung bei geschlossenem Ventil und
- Fig. 2: einen Ausschnitt der Fig. 1, in kleinerem Maßstab, wobei sich der Anker in der angezogenen Betriebsstellung befindet und das Ventil geöffnet ist.

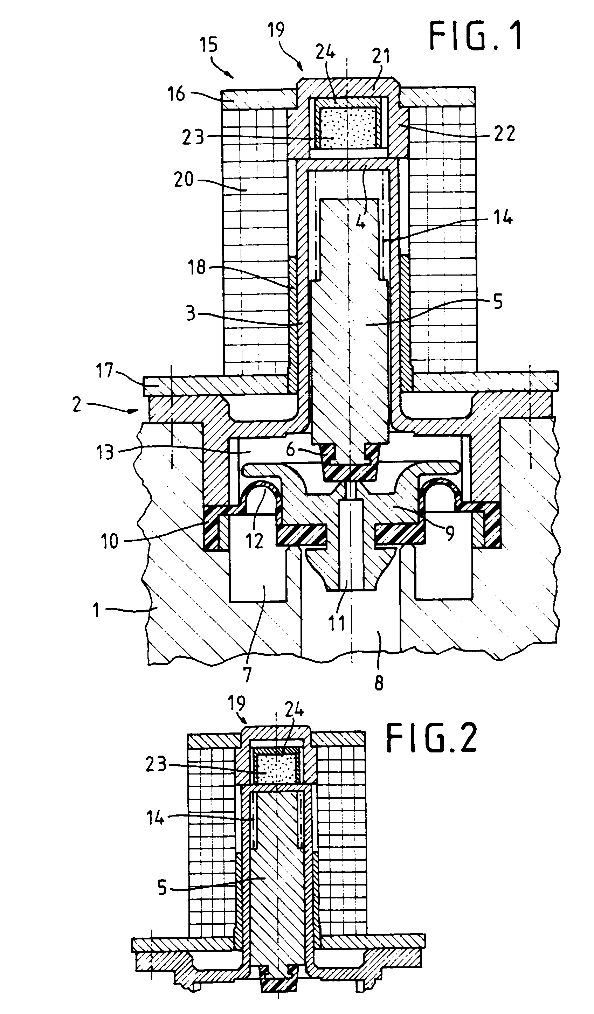

Das Ventil gemäß Fig. 1 hat eine nur ausschnittsweise gezeigte Gehäusestruktur 1 und einen Deckel 2, jeweils aus Kunststoff. Der Deckel hat eine nach oben stehende Führungsbuchse 3, die oben durch eine Stirnwand 4 abgeschlossen ist. In der Führungsbuchse bewegt sich ein zylindrischer Anker 5, der am unteren Ende einen Dichtkörper 6 aufweist. Zwischen einem nicht gezeigten, in einen Ringraum 7 mündenden Einlaßkanal und einem Auslaßkanal 8 befindet sich der Hauptventilsitz. Er wird mittels eines Ventiltellers 9 vom mittleren Teil einer Membrandichtung 10 verschlossen. Der Ventilteller 9 hat eine zentrale Bohrung 11, deren oberes Ende einen Servoventilsitz bildet und mit dem Dichtkörper 6 des Ankers zusammenwirkt. Die Membrandichtung 10 hat eine kleine Durchlaßöffnung 12, welche einen Druckausgleich zwischen dem Ringraum 7 und der durch die Membrandichtung 10 abgeschlossenen Steuerdruckkammer 13 zuläßt.

Der Anker 5 steht unter der Wirkung einer Druckfeder 14, die sich einerseits an einer Schulter des Ankers und andererseits an der Stirnwand 4 abstützt und den Dichtkörper 6 in der Stellung nach Fig. 1 auf den Servoventilsitz des Ventiltellers 9 drückt.

Auf das beschriebene Ventil ist ein Elektromagnet aufgesetzt, der ein Joch 15 aus einem U-förmig gebogenen Flachmaterial aus Weicheisen aufweist. Es hat einen oberen Schenkel 16 und einen unteren Schenkel 17, der gleichzeitig der Befestigung an der Gehäusestruktur des Ventils dient. In dem unteren Schenkel 17 ist ein Polrohr 18 und in den oberen Schenkel 16 ein Kern 19 eingesetzt. Beide haben den gleichen Außendurchmesser und sind von einer schematisch dargestellten Spule 20 umgeben. Das Polrohr 18 legt sich eng um die Führungsbuchse 3 des Ventilgehäuse-Deckels.

Der Kern 19 hat die Form einer Kappe oder eines Topfes mit einem Boden 21 und einer zylindrischen Wand 22, die innen glatt und außen mit einer Schulter versehen ist. Mit dem oberen Teil geringeren Außendurchmessers ist der Kern 19 in den oberen Jochschenkel 16 eingefügt, wobei der Boden 21 etwa in der Ebene dieses Schenkels liegt, während der Rand der Wand 22, d. h. das untere Stirnende des Topfes auf der Querwand 4 der Führungsbuchse aufliegt.

In dem so gebildeten Hohlraum befindet sich ein zylindrischer Permanentmagnet 23, der in einen Edelstahltopf 24 eingeklebt ist. Die Öffnung auch dieses Topfes weist nach unten zum Anker 5. Die Mantelwand des Edelstahltopfs 24 ist mit Längsrillen versehen, um einen ungehinderten Luftausgleich beim schnellen Bewegen des Permanentmagneten zu ermöglichen. Der Edelstahltopf hat ausreichendes Spiel im Kern 19, so daß er sich mit dem Permanentmagnet ungehindert auf und ab bewegen kann zwischen einer vom Anker entfernten Endstellung, in welcher der Boden des Edelstahltopfs am Boden 21 des Kerns anliegt und einer ankernahen Endstellung, in welcher der Permanentmagnet 23 und sein randbündiger Edelstahltopf auf der Querwand 4 aufliegen.

In der in Fig. 1 dargestellten Abwurf stellung des Ankers 5 nimmt der Permanentmagnet 23 seine obere Endstellung ein, in welcher er sich durch seine magnetischen Kräfte am Boden 21 des Kerns festhält. Wird nun ein Gleichstromimpuls auf die Spule 20 aufgebracht, der so gepolt ist, daß der entstehende magnetische Fluß das Feld des Permanentmagneten schwächt, so wird der Permanentmagnet von seiner Anlagefläche am Boden 21 abgestoßen. Gleichzeitig wird der Anker 5 in Richtung-des Kernes angezogen. Durch den Permanentmagneten 23 bleibt der Anker 5 in dieser in Fig. 2 dargestellten angezogenen Betriebsstellung. Der Dichtkörper 6 ist dabei von seinem Servoventil abgehoben, so daß das Ventil öffnen kann.

Beim Anlegen eines entgegengesetzt gepolten Gleichspannungsimpulses wird der Permanentmagnet an seine ursprüngliche Anlagefläche angezogen. Dadurch kann sich der Anker 5, unterstützt durch seine Druckfeder 14, nicht mehr in dieser Lage halten und bewegt sich vom Kern 19 weg in die Betriebsstellung nach Fig. 1 zurück.

Durch die Erfindung wird die Toleranzempfindlichkeit des magnetischen Systems deutlich und so weit vermindert, daß eine Massenproduktion derartiger Magnete bzw. Ventile ohne Einzeljustierung in einer rationellen Weise durchgeführt werden kann. Die erreichte weitere Energieeinsparung ist von größter Bedeutung, wenn es beispielsweise darum geht, in Sanitärarmaturen eingebaute Ventile ohne Netzanschluß aus kleinen Batterien zu betreiben.
- 1: Gehäusestruktur
- 2: Deckel
- 3: Führungsbuchse
- 4: Stirnwand
- 5: Anker
- 6: Dichtkörper
- 7: Ringraum
- 8: Auslaßkanal
- 9: Ventilteller
- 10: Membrandichtung
- 11: Bohrung
- 12: Durchlaßöffnung
- 13: Steuerdruckkammer
- 14: Druckfeder
- 15: Joch
- 16: Schenkel, oben
- 17: Schenkel, unten
- 18: Polrohr
- 19: Kern
- 20: Spule
- 21: Boden
- 22: Wand
- 23: Permanentmagnet
- 24: Edelstahltopf

## Patentansprüche

1. Bistabiler Elektromagnet, insbesondere Magnetventil, mit einer Spule, einem Joch, einem Spulenkern, einem Anker mit zwei Betriebsstellungen, einer auf den Anker wirkenden Feder und mit einem im Kernbereich angeordneten Permanentmagneten, der den Anker in der einen Betriebsstellung entgegen der Federkraft festhält, dadurch gekennzeichnet, daß der Permanentmagnet (23) in einem Hohlraum des Spulenkerns (19) zwischen zwei durch Auschläge festgelegten Endstellungen in Ankerbewegungsrichtung frei beweglich geführt ist.

2. Elektromagnet nach Anspruch 1, dadurch gekennzeichnet, daß der Spulenkern (19) als Topf ausgebildet ist, an dessen Boden (21) sich der Permanentmagnet (23) in der einen Endstellung magnetisch festhält, während der Permanentmagnet in der anderen Endstellung durch einen Anschlag so gehalten wird, daß seine dem Anker (5) zugewendete Seite mit dem Rand des Topfes etwa bündig ist.

3. Elektromagnet nach Anspruch 2, dadurch gekennzeichnet, daß ein den Permanentmagneten (23) umfassender magnetisch nicht leitender Führungskäfig, der an seiner Mantelfläche mit Längsrillen versehen ist, in dem topfförmigen Spulenkern (19) oder am Permanentmagnet (23) befestigt ist.

4. Elektromagnet nach Anspruch 3, dadurch gekennzeichnet, daß der Führungskäfig ein Edelstahltopf (24) ist.

5. Elektromagnet nach Anspruch 3, dadurch gekennzeichnet, daß der Permanentmagnet (23) in dem Führungskäfig eingeklebt ist.

## Claims

1. Bistable electromagnet, especially magnetic valve, comprising a coil, a yoke, a coil core, an armature having two operating positions, a spring acting on the armature and comprising a permanent magnet disposed in the region of the core, which holds the armature against the spring force in the one operating position, characterized in that the permanent magnet (23) is freely movably guided in the movement direction of the armature in a cavity of the coil core (19) between two limiting positions determined by stops.

2. Electromagnet according to claim 1, characterized in that the coil core (19) is constructed as a pot, against the base (21) of which the permanent magnet (23) magnetically adheres in the one limiting position, while the permanent magnet, in the other limiting position, is so held by a stop that its side facing towards the armature (5) is approximately flush with the edge of the pot.

3. Electromagnet according to claim 2, characterized in that a magnetically non-conducting guide cage surrounding the permanent magnet (23), which cage is provided on its outer face with longitudinal grooves, is fixed in the pot-shaped coil core (19) or to the permanent magnet (23).

4. Electromagnet according to claim 3, characterized in that the guide cage is a stainless steel pot (24).

5. Electromagnet according to claim 3, characterized in that the permanent magnet (23) is glued into the guide cage.

## Revendications

1. Electroaimant bistable, en particulier électrovanne, comportant une bobine, une culasse, un noyau de bobine, un induit ayant deux positions de service, un ressort agissant sur l'induit, et un aimant permanent agencé dans la zone du noyau, qui maintient l'induit dans une position de service à l'encontre de la force du ressort,
caractérisé en ce que l'aimant permanent (23) est guidé de façon librement mobile dans une cavité du noyau de bobine (19), entre deux positions d'extrémité déterminées par des butées, dans la direction de mouvement de l'induit.

2. Electroaimant selon la revendication 1,
caractérisé en ce que le noyau de bobine (19) est réalisé sous forme de creuset, au fond (21) duquel l'aimant permanent (23) est maintenu magnétiquement dans une position d'extrémité, tandis que l'aimant permanent, dans l'autre position d'extrémité, est maintenu par une butée, de sorte que sa face en regard de l'induit (5) est sensiblement à fleur du bord du creuset.

3. Electroaimant selon la revendication 2,
caractérisé en ce qu'une cage de guidage magnétiquement non conductrice entourant l'aimant permanent (23), qui est munie, sur sa surface d'enveloppe, de rainures longitudinales, est fixée dans le noyau de bobine en forme de creuset (19) ou sur l'aimant permanent (23).

4. Electroaimant selon la revendication 3,
caractérisé en ce que la cage de guidage est un creuset en acier spécial (24).

5. Electroaimant selon la revendication 3,
caractérisé en ce que l'aimant permanent (23) est collé dans la cage de guidage.
